(19) Europäisches Patentamt
European Patent Office
Office européen des brevets

(11) EP 2 280 043 A1

(12) **EUROPEAN PATENT APPLICATION**
published in accordance with Art. 153(4) EPC

(43) Date of publication:
**02.02.2011 Bulletin 2011/05**

(21) Application number: **09728914.4**

(22) Date of filing: **30.03.2009**

(51) Int Cl.:
***C08L 45/00*** *(2006.01)* ***C08F 8/46*** *(2006.01)*
***C08J 5/00*** *(2006.01)* ***C08K 3/00*** *(2006.01)*
***C08L 23/26*** *(2006.01)* ***C08L 65/00*** *(2006.01)*

(86) International application number:
**PCT/JP2009/056538**

(87) International publication number:
**WO 2009/123138 (08.10.2009 Gazette 2009/41)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **31.03.2008 JP 2008092736**

(71) Applicant: **Mitsui Chemicals, Inc.**
**Tokyo 105-7117 (JP)**

(72) Inventors:
- **TANAKA, Hirokazu**
**Sodegaura-shi**
**Chiba 299-0265 (JP)**
- **ONOGI, Takayuki**
**Sodegaura-shi**
**Chiba 299-0265 (JP)**
- **OOCHI, Hiroyasu**
**Sodegaura-shi**
**Chiba 299-0265 (JP)**

(74) Representative: **HOFFMANN EITLE**
**Patent- und Rechtsanwälte**
**Arabellastraße 4**
**81925 München (DE)**

(54) **IONOMER RESIN COMPOSITION AND MOLDED ARTICLE OBTAINED FROM THE RESIN COMPOSITION**

(57) An ionomer resin composition according to the present invention is obtained by bringing a functional group-containing olefin copolymer (A) having a structural unit derived from a cyclic olefin in the range of 10 percent by mol or more and having a group derived from an acid and/or a derivative thereof as the functional group into contact with a metal compound (B). A shaped article having well-balanced two excellent properties of the optical characteristics and the moisture permeability can be formed by using the ionomer resin composition.

EP 2 280 043 A1

## Description

### Technical Field

The present invention relates to an ionomer resin composition and a shaped article thereof. In particular, the present invention relates to an ionomer resin composition suitable for a raw material for optical members and a shaped article thereof.

### Background Art

Ionomer resins have excellent optical characteristics, e.g., transparency, electrical properties, rubber elasticity, flexibility, formability, oil resistance, chemical resistance, cold resistance, adhesion to metals, heat-sealing properties, and the like and, therefore, have been previously widely used as wrapping materials, e.g., films.
As for the ionomer resins, for example, the following ionomer resins have been known.
(i) Resins having a structure, in which a part of carboxylic acid groups contained in a copolymer obtained from an α-olefin and an ethylenically unsaturated carboxylic acid or an anhydride thereof are neutralized with metal ions (refer to Patent Documents 1 and 2, for example).
(ii) Cyclic polyolefin ionomer resins having a structure, in which ethylene, an α-olefin, and a cyclic olefin containing a functional group, e.g., a carboxylic acid group, are copolymerized and a part of functional groups, e.g., carboxylic acid groups, contained in the resulting copolymer are neutralized with metal ions (refer to Patent Documents 3 to 5, for examples)
Patent Documents 3 to 5 described above disclose that the introduction amount of the cyclic olefins containing a functional group, e.g., a carboxylic acid group, is 0.01 to 5 percent by mol. Furthermore, it is disclosed that the ionomer resins are used in mixed with other polyolefin resins, e.g., polyethylene or polypropylene and are used as thermoplastic elastomers (rubber).
In general, in the case of bonding the ionomer resin film to a surface of a specific member, a water-based adhesive is usually used between the surface of the member and the ionomer resin film. However, if the moisture permeability of the film is reduced, water generated in an adhesion step is confined within the ionomer resin film, and degradation of the member is facilitated. On the other hand, if the moisture permeability of the film increases, water resulting from the adhesive passes through easily. Conversely, this indicates that in the case of using the member which is covered under an usual environmental condition, water in the air permeates into the surface of the member through the ionomer resin film easily, so as to also cause degradation of the member.

Patent Document 1: JP 1964-06810 B
Patent Document 2: JP 1967-15769 B
Patent Document 3: JP 2003-082023 A
Patent Document 4: JP 2005-133086 A
Patent Document 5: JP 2006-083361 A

### Disclosure of the Invention

### Problems to be Solved by the Invention

In the case of using the ionomer resin for the purposes, the ionomer resin is required to have appropriate moisture permeability. However, the ionomer resins disclosed in Patent Documents 1 to 5 described above are intended for an improvement of optical characteristics, e.g., transparency, electrical properties, rubber elasticity, flexibility, or formability. That is, an ionomer resin having both excellent optical characteristics and moisture permeability has not yet been obtained.
It is an object of the present invention to provide an ionomer resin composition which can be formed into a shaped article not only exhibiting excellent heat resistance, dimension stability and mechanical strength, and satisfying optical characteristics, e.g., high transparency, high refractive index and high Abbe number, but also having well-balanced two excellent properties of the optical characteristics and the moisture permeability, and a shaped article which is formed from the composition and which has various excellent properties.
In order to achieve the object, the present inventors studied the moisture permeability of a cyclic olefin resin. As a result, it was found that the content of a structural unit derived from a cyclic olefin and a functional group, e.g., a carboxylic acid, in the resin exerted a significant influence on the moisture permeability. However, it was made clear that the related art has the following problems in achievement of the object.
(1) In the case of obtaining a cyclic polyolefin ionomer resin by the method described in Patent Document 1 or

Patent Document 2, it is difficult to copolymerize in itself a cyclic olefin and an ethylenically unsaturated carboxylic acid or an anhydride thereof. Furthermore, even if such copolymerization can be carried out, it is difficult to increase the introduction amount of the ethylenically unsaturated carboxylic acid or an anhydride thereof.

(2) Regarding the cyclic polyolefin ionomer resin obtained by the methods described in Patent Documents 3 to 5, the introduction amount of the cyclic olefin containing a functional group, e.g., a carboxylic acid, is 0.01 to 5 percent by mol, as described above, and it is low. Moreover, the resin is specialized in the use as a thermoplastic elastomer (rubber). Consequently, it is difficult to obtain a film satisfying both the optical characteristics and the moisture permeability.

Means for Solving the Problems

The present inventors diligently studied to solve the problems. As a result, it was found that the problems were able to be solved by using an olefin copolymer having a structural unit derived from a cyclic olefin in a specific range and having a specific functional group. Consequently, the present invention has been completed. That is, the present invention relates to the following items [1] to [17].

[1] An ionomer resin composition, which is obtained by bringing a functional group-containing olefin copolymer (A) having a structural unit derived from a cyclic olefin in the range of 10 percent by mol or more and having a group derived from an acid and/or a derivative thereof as the functional group into contact with a metal compound (B).

[2] The ionomer resin composition according to the item [1], wherein the functional group-containing olefin copolymer (A) has the structural unit derived from a cyclic olefin in the range of 10 to 50 percent by mol.

[3] The ionomer resin composition according to the item [1] or the item [2], wherein the acid and/or the derivative thereof is an unsaturated carboxylic acid and/or an unsaturated carboxylic acid anhydride.

[4] The ionomer resin composition according to the item [1] or the item [2], wherein the acid and/or the derivative thereof is a sulfonic acid and/or a sulfonic acid anhydride.

[5] The ionomer resin composition according to any one of the items [1] to [4], which is obtained by bringing 100 parts by weight of the functional group-containing olefin copolymer (A) into contact with 0.1 to 50 parts by weight of the metal compound (B).

[6] The ionomer resin composition according to any one of the items [1] to [5], wherein the metal compound (B) is at least one selected from the group consisting of an organic acid metal salt, a carbonic acid metal salt, and an inorganic acid metal salt.

[7] The ionomer resin composition according to the item [6], wherein the organic acid metal salt is an acetic acid metal salt.

[8] The ionomer resin composition according to the item [6] or the item [7], wherein the inorganic acid metal salt is an aminosulfonic acid metal salt.

[9] The ionomer resin composition according to any one of the items [1] to [8], wherein the functional group-containing olefins copolymer (A) is a copolymer obtained by graft-modifying an olefin copolymer having a structural unit derived from a cyclic olefin in the range of 10 percent by mol or more and having a glass transition temperature, which is measured by DSC, in the range of 70°C to 200°C with the acid and/or the derivative thereof.

[10] The ionomer resin composition according to any one of the items [1] to [9], wherein the total content of the group derived from the acid and the derivative thereof in the functional group-containing olefin copolymer (A) is in the range of 0.1 to 70 percent by weight.

[11] The ionomer resin composition according to any one of the items [1] to [10], which has a melt flow rate (MFR) measured at a temperature of 260°C under a load of 2.16 kg on the basis of ASTM D1238 in the range of 0.01 to 200 g/10 min.

[12] The ionomer resin composition according to any one of the items [1] to [11], which has a degree of cloudiness (haze) measured in the state of a sheet having a thickness of 100 μm at room temperature on the basis of JIS K7105 in the range of 0.1 to 30%.

[13] The ionomer resin composition according to any one of the items [1] to [12], which has 0.1 g·mm/($m^2$·day) or more of a water vapor permeability coefficient measured in the state of a sheet having a thickness of 100 μm at a temperature of 40°C and a relative humidity of 90% on the basis of JIS K7129·B method.

[14] A shaped article, which is obtained from the ionomer resin composition according to any one of the items [1] to [13].

[15] The shaped article according to the item [14], which is an optical member.

[16] The shaped article according to the item [14], which is a film.

[17] The shaped article according to the item [14], which is a lens.

Advantages of the Invention

By using the ionomer resin composition according to the present invention, it is possible to form a shaped

article not only exhibiting excellent heat resistance, dimension stability and mechanical strength, and satisfying optical characteristics, e.g., high transparency, high refractive index and high Abbe number, but also having well-balanced two excellent properties of the optical characteristics and the moisture permeability.

Best Modes for Carrying Out the Invention

An ionomer resin composition according to the present invention will be described below in detail. The ionomer resin composition according to the present invention is characterized by being obtained by bringing a functional group-containing olefin copolymer (A) into contact with a metal compound (B). The copolymer (A) has structural units derived from a cyclic olefin in the range of 10 percent by mol or more and has groups derived from an acid and/or a derivative thereof as functional groups.

[Functional group-containing olefin copolymer (A)]

The functional group-containing olefin copolymer (A) has structural units derived from a cyclic olefin in the range of 10 percent by mol or more, preferably 10 to 50 percent by mol, and more preferably 20 to 50 percent by mol. Consequently, the ionomer resin composition capable of forming a shaped article having well-balanced two excellent properties of the optical characteristics, e.g., transparency, and the moisture permeability can be obtained by using the copolymer (A).

Furthermore, the copolymer (A) has a group derived from an acid and/or a derivative thereof as the functional group. The content of the functional groups, that is, the total content of the groups derived from the acid and the derivative thereof is in the range of usually 0.1 to 70 percent by weight, preferably 0.1 to 50 percent by weight, more preferably 0.3 to 30 percent by weight, and particularly preferably 0.5 to 15 percent by weight.

In this regard, the group derived from an acid and a derivative thereof refers to a residue of an acid or a derivative thereof. For example, a group derived from maleic anhydride (maleic anhydride group) is represented by the following formula.

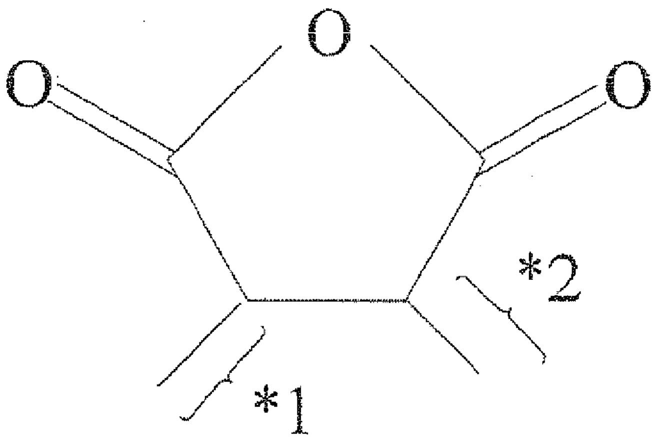

... (1)

In the formula (1), *1 and *2 represent a bond.

The copolymer (A) is obtained by graft-modifying at least one of olefin copolymer with an acid and/or a derivative thereof. Examples of the olefin copolymers include (A-1) an addition copolymer of a cyclic olefin and a copolymerizable monomer, (A-2) a ring-opening copolymer of a cyclic olefin and a copolymerizable monomer, and (A-3) a hydride of the ring-opening copolymer (A-2). The content (percent by mol) of the structural units derived from the cyclic olefin is a value relative to 100 percent by mol of the total of the structural units of the olefin copolymer.

The glass transition temperature measured by DSC of the olefins copolymer is in the range of usually 70 to 200°C, and preferably 120 to 160°C. In the case where the glass transition temperature is in the above-described range, a shaped article obtained from the ionomer resin composition according to the present invention exhibits, for example, excellent dimension stability at high temperatures of 100°C or higher.

Next, (A-1) the addition copolymer of a cyclic olefin and a copolymerizable monomer (hereafter may be referred to as a "cyclic olefin addition copolymer (A-1)"), (A-2) the ring-opening copolymer of a cyclic olefin and a copolymerizable

monomer (hereafter may be referred to as a "cyclic olefin ring-opening copolymer (A-2)"), and (A-3) the hydride of the ring-opening copolymer (A-2) (hereafter may be referred to as a "cyclic olefin ring-opening copolymer hydride (A-3)") will be described sequentially and, thereafter, the graft modification will be described.

<Cyclic olefin addition copolymer (A-1)>

The cyclic olefin addition copolymer (A-1) is obtained by copolymerizing a cyclic olefin represented by the following general formula (a) (hereafter may be referred to as a "cyclic olefin (a)" and a copolymerizable monomer (m1). The cyclic olefin (a) may be used alone or in combination of two or more types

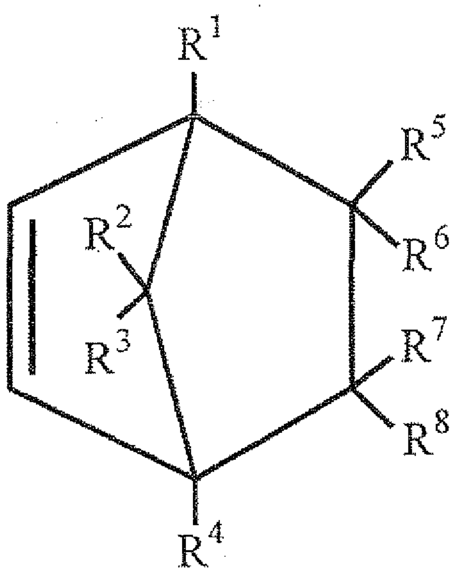

... (a)

In the formula (a), $R^1$ to $R^8$ each independently represent a hydrogen atom, a hydrocarbon group, a halogen atom, an alkoxy group, an ester group, a cyano group, an amide group, an imide group, a silyl group, or a hydrocarbon group substituted with a polar group. Examples of the polar groups include a halogen atom, an alkoxy group, an ester group, a cyano group, an amide group, an imide group, and a silyl group. In this regard, at least two of $R^5$ to $R^8$ may be linked together to form a monocyclic or polycyclic ring. The monocyclic or polycyclic ring may have a carbon-carbon double bond or may form an aromatic ring. Furthermore, a pair of $R^5$ and $R^6$ or a pair of $R^7$ and $R^8$ may form an alkylidene group.
Examples of the hydrocarbon groups include

- an aliphatic hydrocarbon group: a straight-chain or branched alkyl group having 1 to 30 carbon atoms, and preferably 1 to 20 carbon atoms, e.g., methyl, ethyl, n-propyl, isopropyl, n-butyl, isobutyl, sec-butyl, tert-butyl neopentyl, and n-hexyl; a straight-chain or branched alkenyl group having 2 to 30 carbon atoms, and preferably 2 to 20 carbon atoms, e.g., vinyl, allyl, and isopropenyl; and a straight-chain or branched alkynyl group having 2 to 30 carbon atoms, and preferably 2 to 20 carbon atoms, e.g., ethynyl and propargyl;
- an alicyclic hydrocarbon group: a cyclic saturated hydrocarbon group having 3 to 30 carbon atoms, and preferably 3 to 20 carbon atoms, e.g., cyclopropyl, cyclobutyl, cyclopentyl, cyclohexyl, cycloheptyl, cyclooctyl, cyclononyl, cyclodecyl, 2-methyl-cyclohexyl, 2-tert-butyl-cyclohexyl, norbornyl, and adamantyl; and a cyclic unsaturated hydrocarbon group having 5 to 30 carbon atoms, e.g., cyclopentadienyl, indenyl, and fluorenyl; and
- an aromatic hydrocarbon group: an aryl group having 6 to 30 carbon atoms, and preferably 6 to 20 carbon atoms, e.g., phenyl, benzyl, naphthyl, biphenylyl, terphenyl, phenanthryl, and anthryl; and an alkyl-substituted aryl group, e.g., tolyl, iso-propyl phenyl, t-butyl phenyl, dimethyl phenyl, di-t-butyl phenyl.

Examples of the alkoxy groups include a group represented by a formula: -OR wherein R represents the above-described straight-chain or branched alkyl group having 1 to 30 carbon atoms, and preferably 1 to 20 carbon atoms.
Examples of the ester groups include methoxycarbonyl, ethoxycarbonyl, propoxycarbonyl, butoxycarbonyl,

and phenoxycarbonyl.

Examples of the imide groups include acetimide and benzimide.

Examples of the silyl groups include silyl, methylsilyl, dimethylsilyl, trimethylsilyl, phenylsilyl, methylphenylsilyl, dimethylphenylsilyl, diphenylsilyl, diphenylmethylsilyl, and triphenylsilyl.

Specific examples of the cyclic olefin (a) are as described below. In this regard, the specific examples shown here are very limited, and any cyclic olefin can be used insofar as it is represented by the general formula (a).

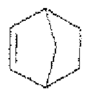
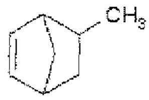
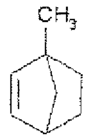

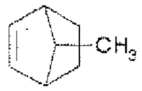
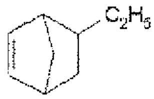
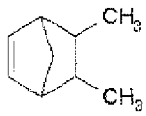

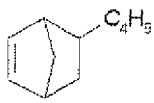
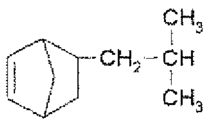

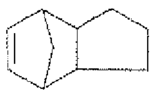
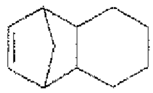

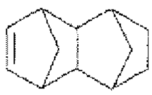
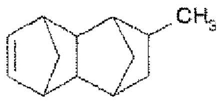
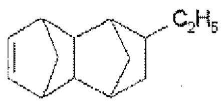

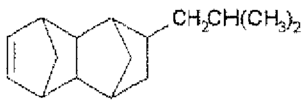
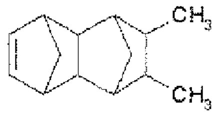

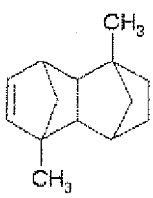
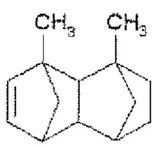
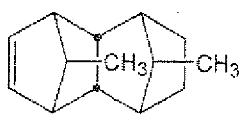

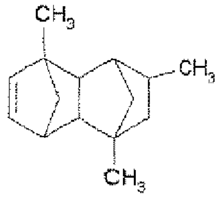

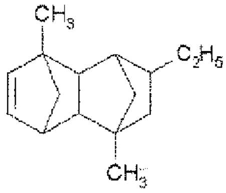

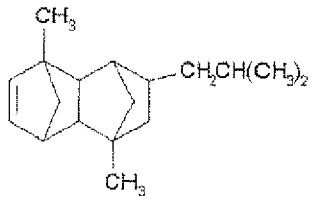

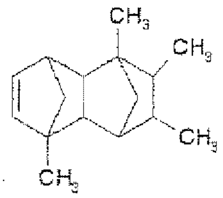

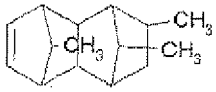

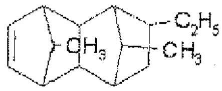

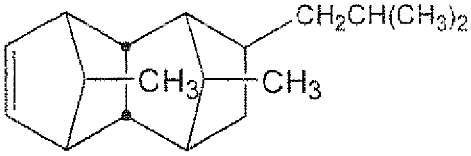

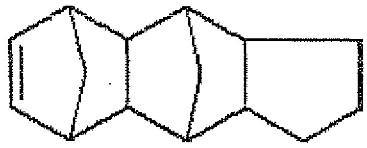

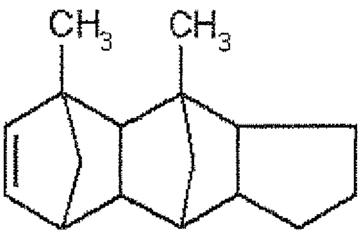

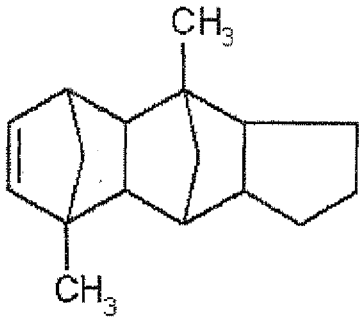

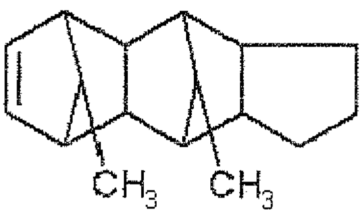

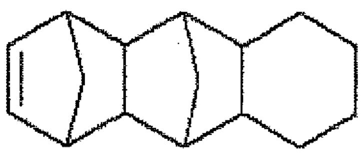

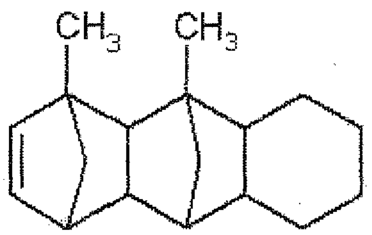

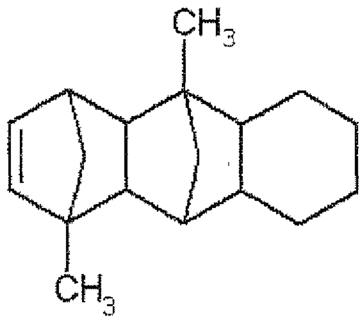

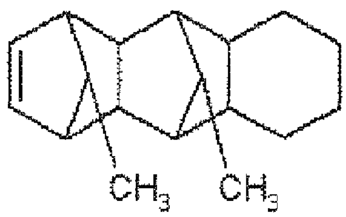

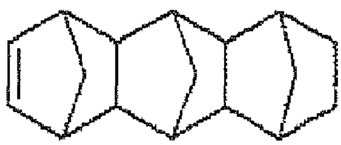

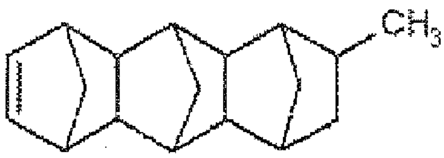

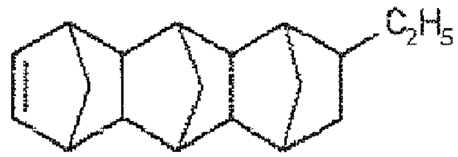

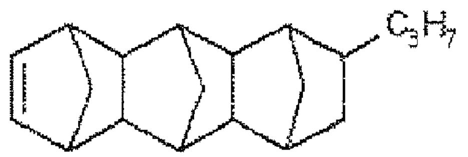

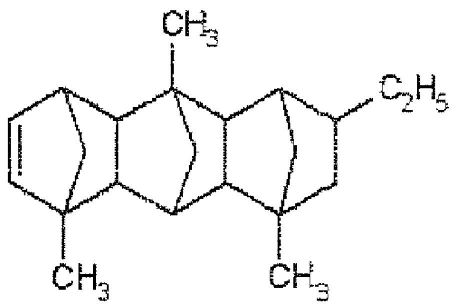

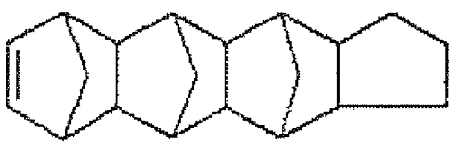

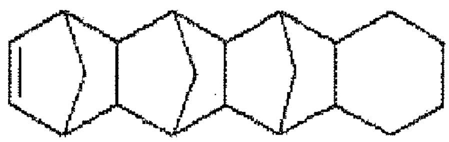

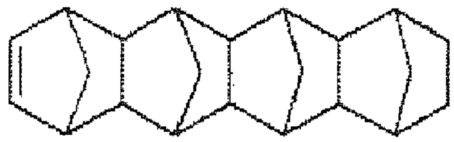

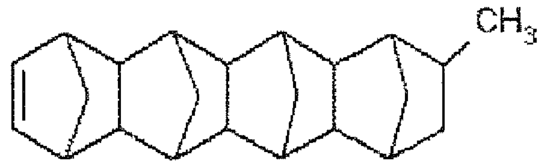

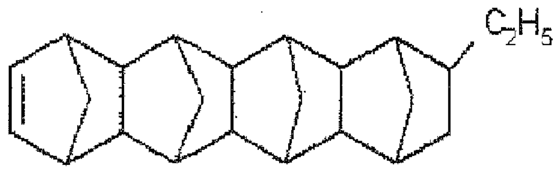

Among them, a cyclic olefin represented by the following formula (b) is favorable from the viewpoint of availability or ease of synthesis. Examples thereof include tetracyclododecene, 1,4,5,8-dimethano-1,2,3,4,4a,5,8,8a-octahydronaphthalene, and 2,3-dimethyl-1,4,5,8-dimethano-1,2,3,4,4a,5,8,8a-octahydronaphthalene.

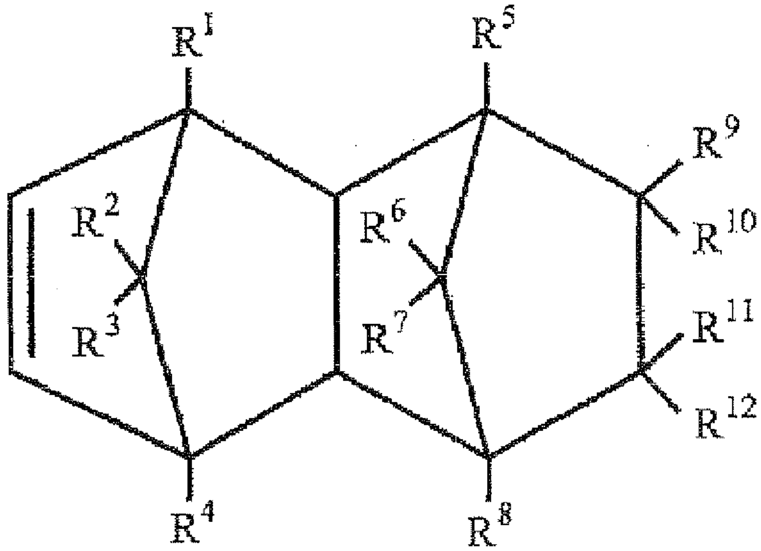

・・・(b)

In the formula (b), $R^1$ to $R^{12}$ each independently represent a hydrogen atom, a hydrocarbon group, a halogen atom, an alkoxy group, an ester group, a cyano group, an amide group, an imide group, a silyl group, or a hydrocarbon group substituted with a polar group. Examples of the polar groups include a halogen atom, an alkoxy group, an ester group, a cyano group, an amide group, an imide group, and a silyl group. In this regard, at least two of $R^9$ to $R^{12}$ may be linked together to form a monocyclic or polycyclic ring. The monocyclic or polycyclic ring may have a carbon-carbon double bond or may form an aromatic ring. Furthermore, a pair of $R^9$ and $R^{10}$ or a pair of $R^{11}$ and $R^{12}$ may form an alkylidene group.

Examples of the hydrocarbon groups, the alkoxy groups, the ester groups, the imide groups, and the silyl groups in the formula (b) can include the hydrocarbon groups, the alkoxy groups, the ester groups, the imide groups, and the silyl groups, respectively, described as examples in the formula (a) likewise.

Furthermore, in the case of using the cyclic olefin (b) as the cyclic olefin (a), the iodine value of the cyclic olefin addition copolymer (A-1) can be usually 5 or less, and preferably 1 or less. If the iodine value exceeds the value, many double bonds remain in the copolymer (A-1), so as to sometimes cause thermal degradation and weathering degradation of a shaped article obtained from the ionomer resin composition according to the present invention.

The cyclic olefin (a) can be synthesized by reacting a cyclopentadiene and an olefin through Diels-Alder reaction (refer to JP 1982-154133 A, for example). Specifically, as represented by the following reaction (1), the cyclic olefin (b) can be synthesized through condensation of norbornene and cyclopentadiene.

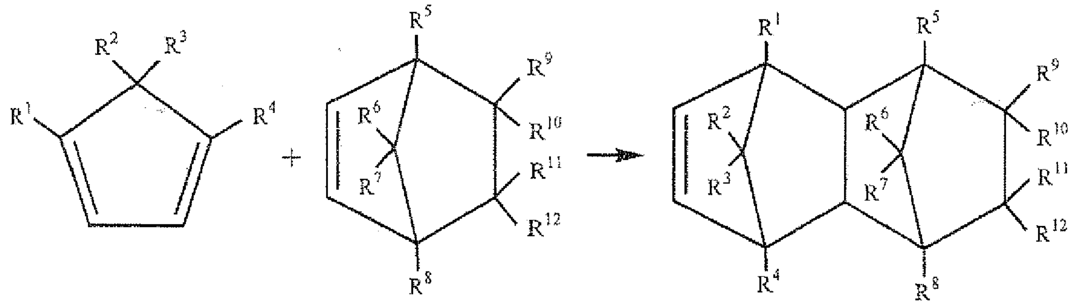

・・・ (1)

In the formula (1), $R^1$ to $R^{12}$ are synonymous with $R^1$ to $R^{12}$, respectively, in the formula (b).
The cyclic olefins (a) other than the cyclic olefins (b) can be synthesized by application of the reaction (1) because they are different only in starting materials basically.

Examples of copolymerizable monomers (m1) include α-olefins, cyclic olefins other than the cyclic olefins (a), and chain dienes.

Examples of the α-olefins include α-olefin usually having 2 to 20 carbon atoms, and preferably having 2 to 10 carbon atoms. Specific examples of the α-olefins include ethylene, propylene, 1-butene, 3-methyl-l-butene, 1-pentene, 3-methyl-l-pentene, 4-methyl-1-pentene, 1-hexene, 1-octene, 1-decene, 1-dodecene, 1-tetradecene, 1-hexadecene, and 1-icosene. Among them, in particular, ethylene is preferable from the viewpoint of copolymerizability. In the case of copolymerizing an α-olefin having 3 or more carbon atoms, a cyclic olefin other than the cyclic olefin (a), or a chain diene with the cyclic olefin (a) as well, presence of ethylene enhances the copolymerizability.

Examples of cyclic olefins other than the cyclic olefins (a) include cyclopentene, cyclohexene, 3,4-dimethylcyclopenten, 3-methylcyclohexene, 2-(2-methylbutyl)-1-cyclohexene, 3a,5,6,7a-tetrahydro-4,7-methano-1H-indene; and cyclic dienes other than the cyclic olefins (a).

Examples of the chain dienes include butadiene, isoprene, 1,4-pentadiene, and 1,5-hexadiene.

The copolymerizable monomer (m1) may be used alone or in combination of two or more types. Furthermore, besides the copolymerizable monomer (m1), other copolymerizable monomers (for example, styrene and α-methylstyrene), which can be copolymerized with the cyclic olefins (a) may be used within the bounds of not impairing the purpose of the present invention.

The content of structural units derived from the cyclic olefin (a) in the cyclic olefin addition copolymer (A-1) is in the range of preferably 10 percent by mol or more, more preferably 10 to 50 percent by mol, and particularly preferably 20 to 50 percent by mol.

Moreover, in the case of using ethylene as the copolymerizable monomer (m1), structural units derived from ethylene/structural units derived from the cyclic olefin (a) (molar ratio) is preferably 10/90 to 90/10, more preferably 50/50 to 90/10, and particularly preferably 50/50 to 80/20.

In addition, in the case of using an α-olefin other than ethylene, a cyclic olefin other than the cyclic olefin (a), or a chain diene as the copolymerizable monomer (m1), a total of structural units derived from these copolymerizable monomers (m1)/structural units derived from the cyclic olefin (a) (molar ratio) is preferably 5/95 to 95/5, and particularly preferably 30/70 to 90/10.

The cyclic olefin addition copolymer (A-1) may be produced by any method, and can be produced preferably by copolymerizing the cyclic olefin (a) and the copolymerizable monomer (m1) through the use of a Ziegler catalyst of vanadium base or the like or other known catalysts. In this regard, the structure of the cyclic olefin addition copolymer (A-1) can be ascertained by $^{13}C$-NMR.

<Cyclic olefin ring-opening copolymer (A-2)>

The cyclic olefin ring-opening copolymer (A-2) is obtained by ring-opening copolymerization of a cyclic olefin represented by the following general formula (I) and/or a general formula (II) (hereafter may be referred to as a "cyclic olefin (I)" and a "cyclic olefin (II)", respectively) and a copolymerizable monomer (m2). It is believed that in the cyclic

olefin ring-opening copolymer (A-2), at least a part of the cyclic olefins (I) and (II) used as raw materials constitute repeating units (structural units) represented by the following general formulae (III) and (IV).

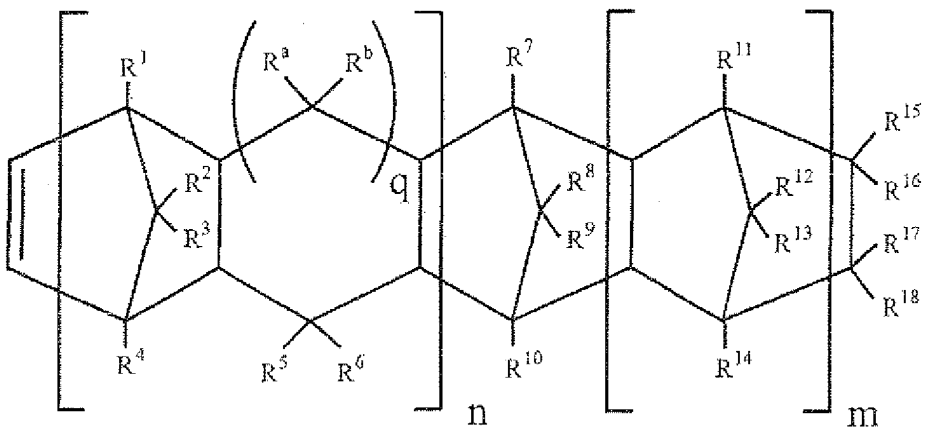

· · · (I)

In the formula (I), n represents 0 or 1, m represents 0 or an integer of 1 or more, q represents 0 or 1, $R^1$ to $R^{18}$, $R^a$, and $R^b$ each independently represent a hydrogen atom, a halogen atom, or a hydrocarbon group. In this regard, at least two of $R^{15}$ to $R^{18}$ may be linked together to form a monocyclic or polycyclic ring. The monocyclic or polycyclic ring may have a double bond. Furthermore, a pair of $R^{15}$ and $R^{16}$ or a pair of $R^{17}$ and $R^{18}$ may form an alkylidene group.

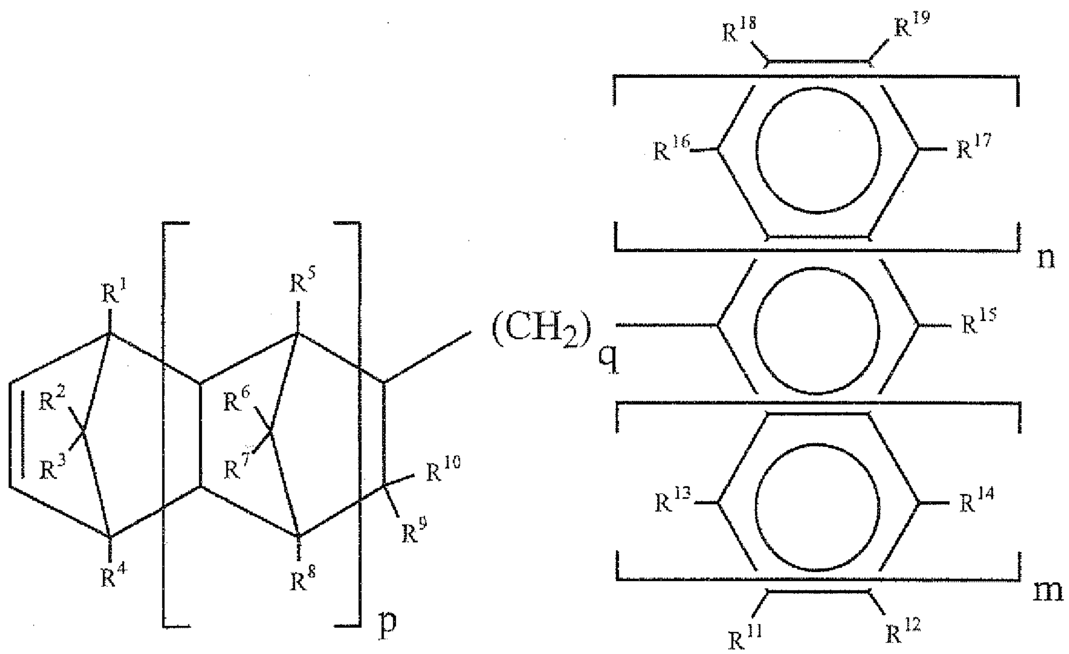

· · · (II)

In the formula (II), p and q represent 0 or an integer of 1 or more, m and n represent 0, 1, or 2, $R^1$ to $R^{19}$ each independently represent a hydrogen atom, a halogen atom, an aliphatic hydrocarbon group, an alicyclic hydrocarbon group, an aromatic hydrocarbon group, or an alkoxy group, a carbon atom bonded to $R^9$ and $R^{10}$ and a carbon atom bonded to $R^{11}$ or $R^{13}$ may be linked to each other directly or with an alkylene group having 1 to 3 carbon atoms therebetween, and when n = m = 0, a pair of $R^{15}$ and $R^{12}$ or a pair of $R^{15}$ and $R^{19}$ may be linked together to form a

monocyclic or polycyclic aromatic ring.

Examples of the hydrocarbon groups in the formula (I) and the aliphatic hydrocarbon groups, the alicyclic hydrocarbon groups, the aromatic hydrocarbons, and the alkoxy groups in the formula (II) can include the hydrocarbon groups, the aliphatic hydrocarbon groups, the alicyclic hydrocarbon groups, the aromatic hydrocarbons, and the alkoxy groups, respectively, described as examples in the formula (a) likewise.

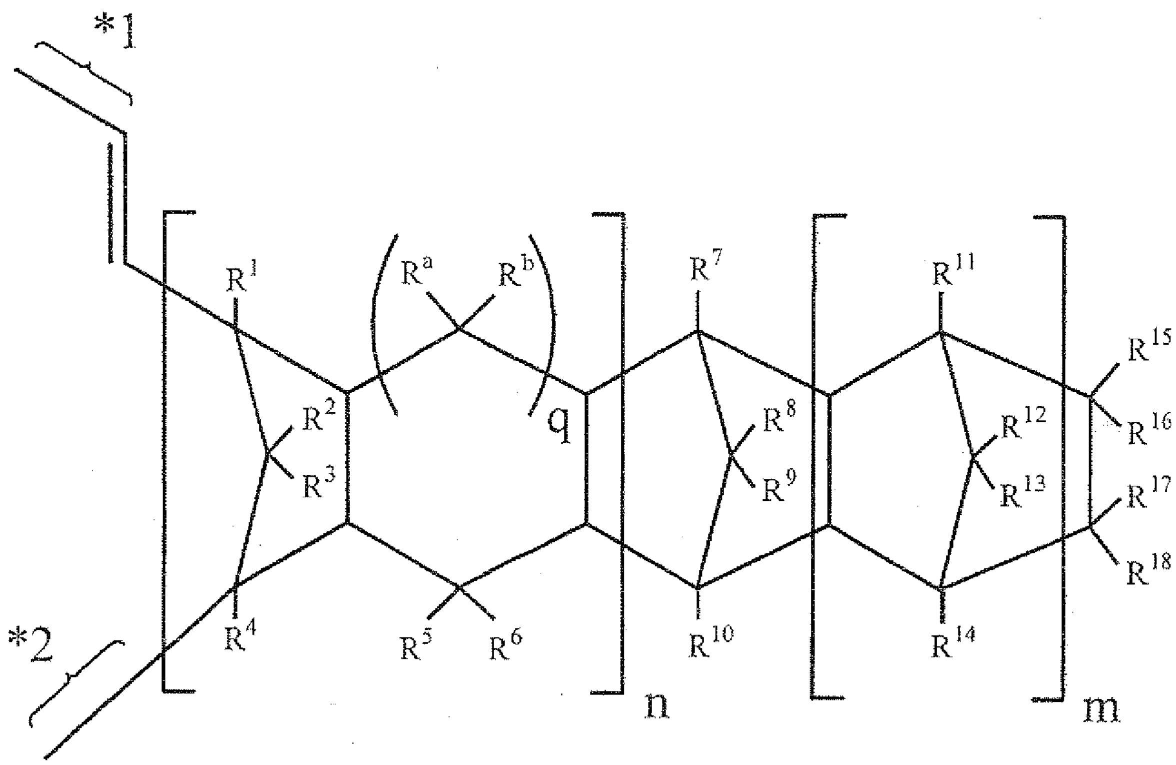

· · · (III)

In the formula (III), n, m, q, $R^1$ to $R^{18}$ $R^a$, and $R^b$ are synonymous with n, m, q, $R^1$ to $R^{18}$, $R^a$, and $R^b$, respectively, in the formula (I). Furthermore, *1 and *2 represent a bond.

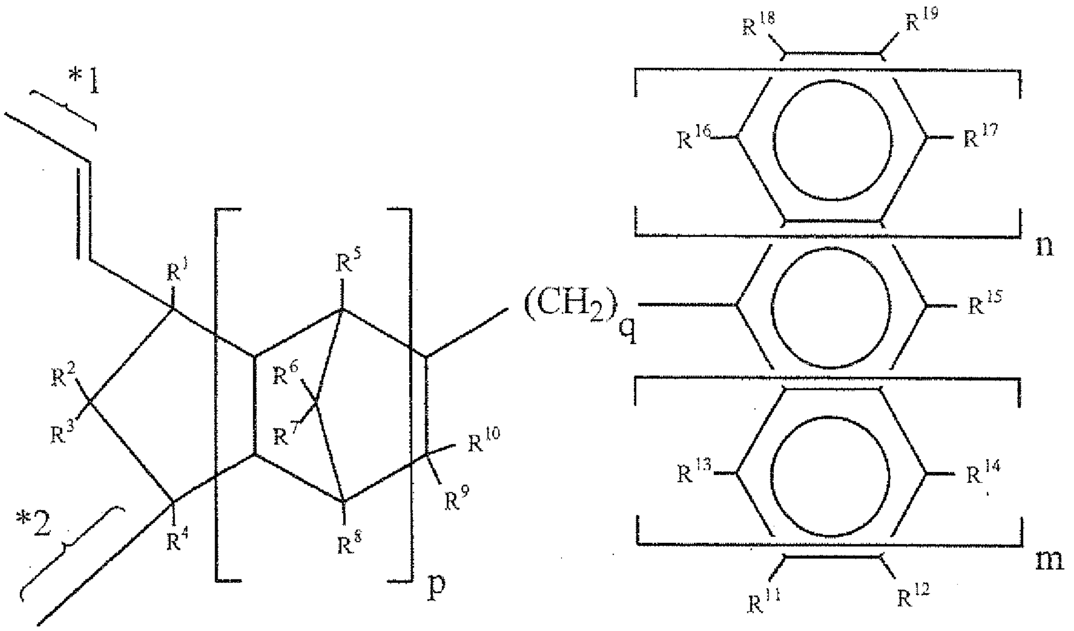

・・・(IV)

In the formula (IV), n, m, p, q, and $R^1$ to $R^{19}$ are synonymous with n, m, p, q, and $R^1$ to $R^{19}$, respectively, in the formula (II). Furthermore, *1 and *2 represent a bond.

Examples of copolymerizable monomers (m2) include α-olefins and cyclic olefines other than the cyclic olefins (I) and (II).

Examples of the α-olefins include α-olefin usually having 2 to 20 carbon atoms, and preferably having 2 to 10 carbon atoms. Specific examples of the α-olefins include ethylene, propylene, 1-butene, 3-methyl-1-butene, 1-pentene, 3-methyl-1-pentene, 4-methyl-1-pentene, 1-hexene, 1-octene, 1-decene, 1-dodecene, 1-tetradecene, 1-hexadecene, and 1-icosene. Among them, in particular, ethylene is preferable from the viewpoint of copolymerizability. In the case of copolymerizing an α-olefin having 3 or more carbon atoms or a cyclic olefin other than the cyclic olefins (I) and (II) with the cyclic olefins (I) and (II) as well, presence of ethylene enhances the copolymerizability.

Examples of cyclic olefins other than the cyclic olefins (I) and (II) include cyclopentene, cyclohexene, 3,4-dimethylcyclopenten, 3-methylcyclohexene, 2-(2-methylbutyl)-1-cyclohexene, 3a,5,6,7a-tetrahydro-4,7-methano-1H-indene; and cyclic dienes other than the cyclic olefins (I) and (II).

The copolymerizable monomer (m2) may be used alone or in combination of two or more types. Furthermore, besides the copolymerizable monomer (m2), other copolymerizable monomers (for example, styrene and α-methylstyrene), which can copolymerized with the cyclic olefins (I) and (II), may be used within the bounds of not impairing the purpose of the present invention.

A total content of structural units derived from the cyclic olefins (I) and (II) and structural units represented by the formulae (III) and (IV) in the cyclic olefin ring-opening copolymer (A-2) is in the range of preferably 10 percent by mol or more, more preferably 10 to 50 percent by mol, and particularly preferably 20 to 50 percent by mol.

Moreover, in the case of using ethylene as the copolymerizable monomer (m2), structural units derived from ethylene/[a total of structural units derived from the cyclic olefins (I) and (II) and structural units represented by the formulae (III) and (IV) (molar ratio) is preferably 10/90 to 90/10, more preferably 50/50 to 90/10, and particularly preferably 50/50 to 80/20.

In addition, in the case of using an α-olefin other than ethylene or a cyclic olefin other than the cyclic olefins (I) and (II) as the copolymerizable monomer (m2), a total of structural units derived from these copolymerizable monomers (m2)/[a total of structural units derived from the cyclic olefins (I) and (II) and structural units represented by the formulae (III) and (IV)] (molar ratio) is preferably 5/95 to 95/5, and particularly preferably 30/70 to 90/10.

Furthermore, the iodine value of the cyclic olefin ring-opening copolymer (A-2) is usually 5 or less, and preferably 1 or less. If the iodine value exceeds the value, many double bonds remain in the copolymer (A-2), so as to sometimes cause thermal degradation and weathering degradation of a shaped article obtained from the ionomer resin composition according to the present invention.

For example, the cyclic olefin ring-opening copolymer (A-2) can be produced preferably by copolymerizing the

cyclic olefin (I) and/or (II) and the copolymerizable monomer (m2) in the presence of a ring-opening polymerization catalyst.

Examples of the ring-opening polymerization catalysts include catalysts comprising metal halides (the metal is selected from ruthenium, rhodium, palladium, osmium, indium, and platinum.), nitrates or acetylacetone compounds, and reducing agents; and catalysts comprising metal halides (the metal is selected from titanium, palladium, zirconium, and molybdenum) or acetylacetone compounds, and organic aluminum compounds. In this regard, the structure of the cyclic olefin ring-opening copolymer (A-2) can be ascertained by $^{13}C$-NMR.

<Cyclic olefin ring-opening copolymer hydride (A-3)>

The cyclic olefin ring-opening copolymer hydride (A-3) is obtained by hydrogenating the cyclic olefin ring-opening copolymer (A-2), which is obtained as described above, in the presence of a previously known hydrogenation catalyst.

It is believed that in the cyclic olefin ring-opening copolymer hydride (A-3), at least a part of the repeating units represented by the general formulae (III) and (IV) have been converted to repeating units represented by the following general formulae (V) and (VI).

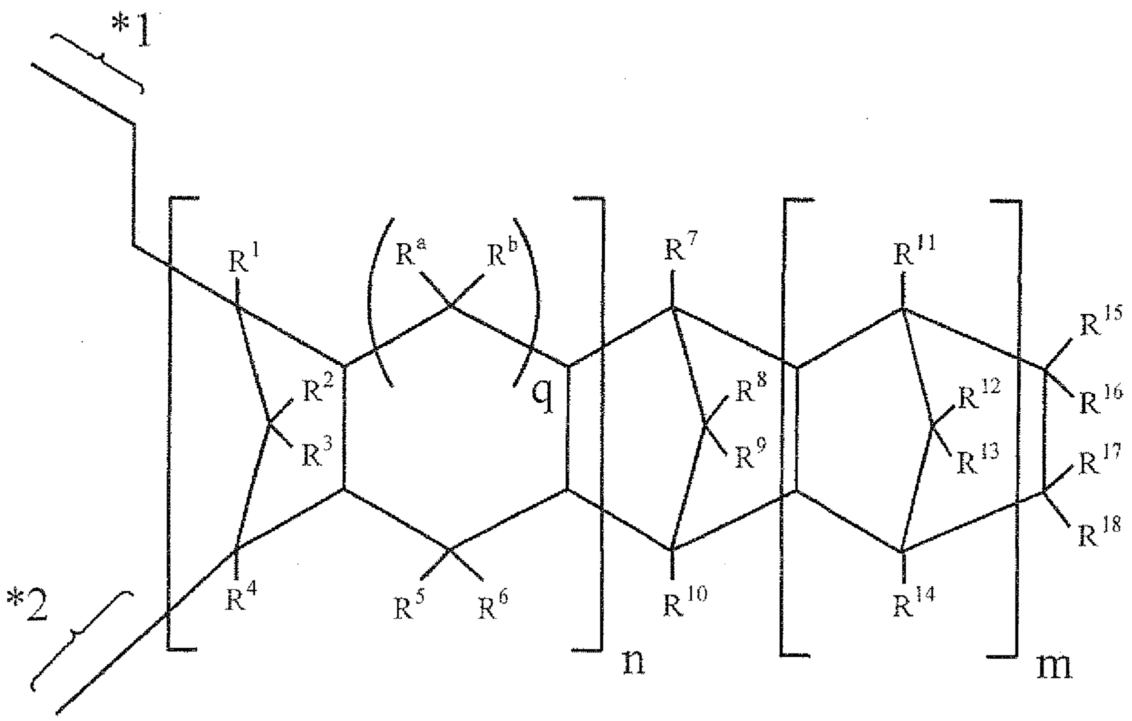

... (V)

The formula (V), n, m, q, $R^1$ to $R^{18}$, $R^a$, and $R^b$ are synonymous with n, m, q, R to $R^{18}$, R , and R , respectively, in the formula (I). Furthermore, *1 and *2 represent a bond.

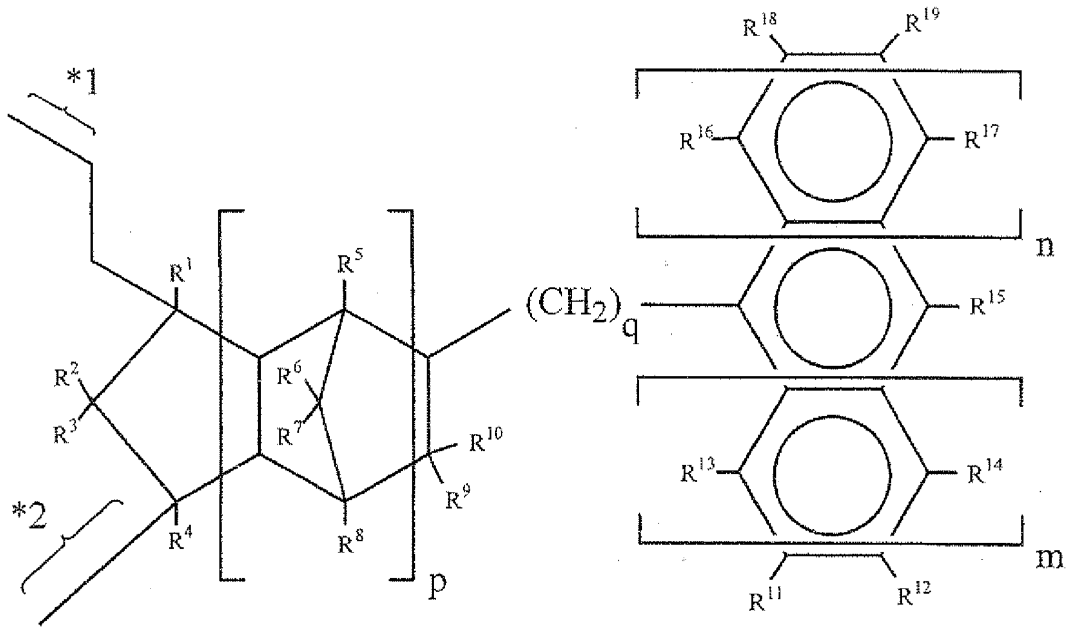

. . . (VI)

In the formula (VI), n, m, p, q, and $R^1$ to $R^{19}$ are synonymous with n, m, p, q, and $R^1$ to $R^{19}$, respectively, in the formula (II). Furthermore, *1 and *2 represent a bond.

Moreover, the iodine value of the cyclic olefin ring-opening copolymer hydride (A-3) is usually 5 or less, and preferably 1 or less. If the iodine value exceeds the value, many double bonds remain in the copolymer (A-3), so as to sometimes cause thermal degradation and weathering degradation of a shaped article obtained from the ionomer resin composition according to the present invention.

<Graft modification>

The functional group-containing olefin copolymer (A) is obtained by graft-modifying the olefin copolymers, for example, the above-described (A-1) to (A-3), with an acid and/or a derivative thereof.

The copolymer (A) is graft-modified in such a way that the functional group content, that is, a total content of groups derived from an acid and/or a derivative thereof is in the range of usually 0.1 to 70 percent by weight, preferably 0.1 to 50 percent by weight, more preferably 0.3 to 30 percent by weight, and particularly preferably 0.5 to 15 percent by weight. If the functional group content is smaller than the range, unfavorably, the moisture permeability or the transparency of the ionomer resin composition, which is one of the effects of the present invention, is degraded. On the other hand, if an increase in the functional group content from the range is intended, a cross-linking reaction of main chain skeleton, ethylene skeleton, or the like of the olefin copolymers such as the above-described (A-1) to (A-3) serving as base polymers occurs inevitably at the same time with the graft reaction by the action of heat or a radical initiator such as peroxide. As a results, the molecular weight of the copolymer (A) increases extremely, so that the melt fluidity is reduced significantly. Consequently, the formability of the ionomer resin composition may be degraded.

Examples of the acids include unsaturated carboxylic acids, e.g., maleic acid, fumaric acid, tetrahydrophthalic acid, itaconic acid, citraconic acid, crotonic acid, isocrotonic acid, Nadic acid (registered trade mark), acrylic acid, and methacrylic acid; and sulfonic acids.

Examples of the derivatives of the acids include acid anhydrides, imides, amides, esters of the unsaturated carboxylic acids and the sulfonic acids. Specific examples include maleic anhydride, citraconic anhydride, sulfonic acid anhydride, maleimide, monomethyl maleate, and glycidyl maleate.

Among them, the unsaturated carboxylic acids and acid anhydrides thereof (unsaturated carboxylic acid anhydrides) are used favorably. In particular, maleic acid, Nadic acid (registered trade mark), and acid anhydrides thereof are used favorably. Furthermore, sulfonic acid and acid anhydrides thereof (sulfonic acid anhydrides) are also used favorably.

Examples of methods for introducing the acid and/or the derivative thereof (hereafter may be referred to as a "graft monomer") into the olefin copolymer, e.g., the above-described (A-1) to (A-3), (hereafter may be referred to as a

"base polymer"), include (1) a method comprising graft-modifying the base polymer with the graft monomer, and (2) in the case where structural units derived from a chain or cyclic diene are contained in the base polymer, a method comprising reacting carbon-carbon double bonds included in the structural units with appropriate treatment agents.

(1) Graft modification

As for the method for graft-modifying the base polymer with the graft monomer, previously known methods can be used. For example, in the case of using an ethylene/tetracyclododecene copolymer as the base polymer, (i) a melt modification method comprising melting the copolymer, and adding the graft monomer to carry out graft copolymerization, (ii) a solution modification method comprising dissolving the copolymer into a solvent, and adding the graft monomer to carry out graft copolymerization, can be used.

In order to obtain the copolymer (A) by grafting the graft monomer on the base polymer efficiently, it is preferable to carry out the graft reaction in the presence of a radical initiator. In this case, the graft reaction is carried out usually at a temperature of 60 to 350°C. The proportion in the use of the radical initiator is usually 0.001 to 2 parts by weight relative to 100 parts by weight of the base polymer.

As for the radical initiators, organic peroxides, e.g., dicumyl peroxide, di-tert-butyl peroxide, 2,5-dimethyl-2,5-di (tert-butylperoxyl) hexyne-3, 2,5-dimethyl-2,5-di(tert-butylperoxy)hexane, and 1,4-bis (tert-butylperoxy isopropyl)benzene, are preferable.

(2) A method for reacting carbon-carbon double bonds included in the base polymer with treatment agents

In the case where structural units derived from a chain or cyclic diene are contained in the base polymer, the graft monomer can be introduced by reacting carbon-carbon double bonds included in the structural units with appropriate treatment agents (for example, (i) and (ii) described below).

(i) As for a method for introducing the unsaturated carboxylic acid into the base polymer, a method described in JP 2006-137838 A can be used. For example, in the case of introducing maleic anhydride, the base polymer is reacted with maleic anhydride under an acidic condition. In this regard, the unsaturated carboxylic acid introduced into the base polymer is not limited to carboxylic acid anhydride.

(ii) As for a method for introducing the sulfonic acid into the base polymer, a method described in JP 2006-137838 A can be used. For example, sulfuric acid-acetic anhydride, fuming sulfuric acid serving as a reaction agent may be reacted with the base polymer.

[Metal compound (B)]

By using a metal compounds (B), metal components thereof form ionic bonds with functional groups included in the functional group-containing olefin copolymer (A), so that cross-linked structures are formed between the molecules of the copolymer (A).

Examples of the metal compounds (B) include metal salts, metal oxides, metal hydroxides, and metal complexes. They may be used alone or in combination of two or more types.

Furthermore, specific examples of metal components in the metal compounds (B) include metals of groups I to VIII of the periodic table, e.g., lithium, sodium, potassium, aluminum, zirconium, magnesium, calcium, barium, cesium, strontium, rubidium, titanium, zinc, copper, iron, tin, and lead. Among them, sodium, potassium, magnesium, calcium, zirconium, zinc, and aluminum are preferable.

<Metal salt>

Examples of the metal salts include organic acid metal salts, carbonic acid metal salts, and inorganic acid metal salts. These metal salts may be used alone or in combination of two or more types.

Specific examples of the organic acid metal salts include stearic acid metal salts, e.g., sodium stearate, potassium stearate, magnesium stearate, calcium stearate, and zinc stearate; and acetic acid metal salts, e.g., sodium acetate, potassium acetate, magnesium acetate, calcium acetate, and zinc acetate.

Specific examples of the carbonic acid metal salts include sodium carbonate, sodium hydrogen carbonate, potassium carbonate, potassium hydrogen carbonate, magnesium carbonate, calcium carbonate, and zinc carbonate.

Among them, acetate metal salts and carbonic acid metal salts are preferable, and zinc acetate, potassium acetate, sodium carbonate and potassium hydrogen carbonate are more preferable because excellent dispersibility in the ionomer resin composition is exhibited and, thereby, the ionomer resin composition having good transparency and moisture permeability is obtained.

Specific examples of the inorganic acid metal salts include metal salts of aminosulfonic acid, e.g., p-aminobenzene sulfonic acid (sulfanilic acid), m-aminobenzene sulfonic acid, o-aminobenzene sulfonic acid, and 2-aminoethane sulfonic acid (another name: taurine or aminoethyl sulfonic acid). More specific examples include potassium aminoethyl sulfonate. These metal salts of aminosulfonic acid may be used alone or in combination of two or more types.

<Metal oxide, metal hydroxide>

Specific examples of the metal oxides include CuO, MgO, BaO, ZnO, $Al_2O_3$, $Fe_2O_3$, SnO, CaO, $TiO_2$, and $ZrO_2$.
Specific examples of the metal hydroxides include LiOH, NaOH, KOH, $Cu(OH)_2$, $Cu_2O(OH)_2$, Mg(OH)2, $Mg_2O(OH)_2$, $Ba(OH)_2$, $Zn(OH)_2$, $Sn(OH)_2$, and $Ca(OH)_2$.
These metal compounds may be used alone or in combination of two or more types.

<Proportion in use of metal compound (B)>

The proportion in the use of the metal compound (B) is usually 0.1 to 50 parts by weight, preferably 0.5 to 25 parts by weight, and particularly preferably 1 to 10 parts by weight relative to 100 parts by weight of the functional group-containing olefin copolymer (A).
In the case where the proportion in the use of the metal compound (B) is smaller than the range, the crosslink density of the resulting ionomer resin composition tends to become low. Consequently, the mechanical strength and the scratching resistance tend to become low. On the other hand, in the case where the proportion in the use of the metal compound (B) exceeds the range, the crosslink density of the resulting ionomer resin composition tends to become high. Consequently, the melt fluidity of the resin composition may increase significantly and the formability may be degraded.

[Production of ionomer resin composition]

The ionomer resin composition according to the present invention is obtained by, for example, melt-kneading the functional group-containing olefin copolymer (A) in the presence of the metal compound (B). Here, the term "melt kneading" refers to a treatment, in which shearing and heating are conducted at the same time. The melt kneading can be conducted with a common melt kneading apparatus used for, for example, working a thermoplastic resin. The melt kneading apparatus may be of batch system or continuous system. Examples of the melt kneading apparatuses include batch melt kneading apparatuses, e.g., a Banbury mixer and a kneader; and continuous melt kneading apparatuses, e.g., a continuous co-rotating twin-screw extruder.
It is preferable that the melt kneading is conducted with respect to a mixture comprising the copolymer (A) and the metal compound (B). Specific examples of the methods include the methods described in the following items ($\alpha$) and ($\beta$).
($\alpha$) A method comprising melt-kneading a mixture including the copolymer (A) and the metal compound (B) continuously with a twin-screw extruder.
($\beta$) A method comprising melt-kneading a mixture including the copolymer (A) and the metal compound (B) with a batch kneader.
The condition of the melt kneading is different depending on the melting point or the glass transition temperature of the copolymer (A), the type of the metal compound (B), the type of the melt kneading apparatus, and the like. For example, the treatment temperature is usually 200 to 300°C, and preferably 230 to 280°C; and the treatment time is usually 30 seconds to 30 minutes, and preferably 60 seconds to 10 minutes.
In this regard, in the case of using the organic acid metal salt as the metal compound (B), it is preferable to bring the copolymer (A) into contact with the organic acid metal salt in the form of, for example, an aqueous solution. The water contained in the aqueous solution hydrolyzes an acid anhydride group to a dibasic acid. Therefore, in particular, the form has an advantage in the case of the functional group-containing olefin copolymer (A) grafted with an acid anhydride.
Furthermore, the ionomer resin composition can be blended with various additives, e.g., a flame retardant, a heat stabilizer, an oxidation stabilizer, a weathering stabilizer, an antistatic agent, a lubricant, and a plasticizer, as necessary, within the bounds of not impairing the effects of the present invention.

[Properties of ionomer resin composition]

The ionomer resin composition according to the present invention has a melt fluidity (the index of average molecular weight of polymers included in the resin composition), that is, a melt flow rate (MFR) measured at a temperature of 260°C under a load of 2.16 kg on the basis of ASTM D1238 in the range of usually 0.01 to 200 g/10 min, and preferably 0.1 to 100 g/10 min. The MFR can be controlled by setting the type of the graft monomer, the proportion in the use of the metal compound (B) relative to the functional group-containing olefin copolymer (A), and the type of the metal

compound (B) within the above-described ranges and compounds appropriately.

The ionomer resin composition according to the present invention has a degree of cloudiness (haze) measured in the state of a sheet having a thickness of 100 μm at room temperature on the basis of JIS K7105 in the range of usually 0.1 to 30%, and preferably 0.1 to 15%. The haze can be controlled by the dispersibility of the metal compound (B) in the ionomer resin composition, that is, by setting the condition of melt kneading within the above-described range appropriately.

The ionomer resin composition according to the present invention has a water vapor permeability coefficient measured in the state of a sheet having a thickness of 100 μm at a temperature of 40°C and a relative humidity of 90% on the basis of JIS K7129·B method in the range of usually 0.1 g·mm/($m^2$·day) or more, and preferably 0.5 gm·m/($m^2$·day) or more. In this regard, an upper limit value of the water vapor permeability coefficient is not specifically limited, although about 5.0 is preferable. The water vapor permeability coefficient can be controlled by setting the introduction amount of the graft monomer and the type and the introduction amount of the metal compound (B) within the above-described ranges and compounds appropriately.

The ionomer resin composition according to the present invention has Abbe number measured in the state of a sheet having a thickness of 100 μm on the basis of ASTM D542 in the range of usually 50 or more, and preferably 55 or more. In this regard, an upper limit value of the Abbe number is not specifically limited, although about 70 is preferable.

The ionomer resin composition according to the present invention has a refractive index measured in the state of a sheet having a thickness of 100 μm on the basis of ASTM D542 in the range of usually 1.530 to 1.560, and preferably 1.540 to 1.550.

Regarding polymers included in the ionomer resin composition according to the present invention, the weight average molecular weight in terms of polystyrene measured through gel permeation chromatography (GPC) is usually 10,000 or more, preferably 30,000 or more, and more preferably 50,000 or more. In this regard, an upper limit value of the weight average molecular weight is not specifically limited, although about 1,000,000 is preferable.

In the case where the properties of the ionomer resin composition according to the present invention are within the above-described ranges, a shaped article not only exhibiting excellent heat resistance, dimension stability and mechanical strength, and satisfying optical characteristics, e.g., high transparency, high refractive index and high Abbe number, but also having well-balanced two excellent properties of the optical characteristics and the moisture permeability can be formed.

[Uses of ionomer resin composition]

The ionomer resin composition according to the present invention has well-balanced optical characteristics, e.g., transparency, moisture permeability, heat resistance, dimension stability, and mechanical strength. Therefore, shaped articles obtained from the ionomer resin composition according to the present invention can be used effectively for, for example, optical member purposes, e.g., films and lenses; circuit board purposes, e.g., hard printed boards, flexible printed boards, and multilayer printed wiring boards; and high-frequency circuit board purposes, e.g., transparent electrically conductive films, for satellite communication apparatuses and the like, in which high frequency characteristics are particularly required.

Examples of the films include optical films for display (phase difference films, polarization films, diffusion films, antireflection films, liquid crystal substrates, PDP front panels, touch panel substrates, EL substrates, electronic paper substrates, and the like) and films for optical recording disks.

Furthermore, it is also possible to use them as protective films of the various films and substrates effectively. In particular, the ionomer resin composition according to the present invention is favorably used for polarization plate protective films and the like in the field of, for example, display materials.

In this regard, as for a method for forming the ionomer resin composition according to the present invention into the shape of a sheet or a film, various known methods, e.g., extrusion, injection molding, press, and casting, can be applied.

EXAMPLES

The present invention will be specifically described below with reference to examples, although the present invention is not limited to these examples. In the present invention, individual properties were measured by the following methods.

(1) Melt flow rate (MFR)

The melt flow rates (MFR) of various resin compositions were measured at a temperature of 260°C under a load of 2.16 kg on the basis of ASTM D1238.

(2) Refractive index and Abbe number

**[0136]** The refractive indices (nd) and the Abbe numbers (νd) of the various resin compositions were measured in the state of a sheet having a thickness of 100 μm at 23°C on the basis of ASTM D542 with an Abbe refractometer.

(3) Total haze

The total haze of the various resin compositions were measured in the state of a sheet having a thickness of 100 μm at room temperature on the basis of JIS K7105. Regarding the light-shielding property, it was evaluated that practically no problem occurred insofar as the total haze was 55% or less.

(4) Visual evaluation of dispersibility of mental compound (B)

As for evaluation of the transparency besides the haze measurement, evaluation of the dispersibility of the metal compounds (B) in the various resin compositions was conducted visually in the state of a sheet having a thickness of 100 μm on the basis of the following criteria.

- AA A whole sheet was uniformly transparent, and letters placed 1 m behind the sheet were able to be identified through the sheet.
- BB A whole sheet was translucent, and letters placed 1 m behind the sheet were unable to be identified through the sheet.
- CC A whole sheet was clouded completely.

(5) Moisture permeability

The water vapor permeability coefficients (moisture permeability coefficient) of the various resin compositions were measured in the state of a sheet having a thickness of 100 μm at a temperature of 40°C and a relative humidity of 90% on the basis of JIS K7129·B method.

(6) Rate of increase in moisture permeability

The rate of increase in moisture permeability serving as an index of change in moisture permeability due to conversion to the ionomer was defined as described below.

rate of increase in moisture permeability (%) = 100 × [(water vapor permeability coefficient of resin composition after conversion to ionomer) - (water vapor permeability coefficient of resin composition before conversion to ionomer)]/(water vapor permeability coefficient of resin composition before conversion to ionomer)

[Preparation example 1]

Mixing of 100 parts by weight of ethylene/tetracyclododecene copolymer (trade name: APEL 5015 produced by Mitsui Chemicals, Inc., hereafter may be referred to as "COC") having a content of structural units derived from ethylene of 65 percent by mol and a content of structural units derived from tetracyclododecene of 35 percent by mol, a glass transition temperature of 140°C, an iodine value of 0.1 or less, and MFR of 30 g/10 min, 1 part by weight of

maleic anhydride, and 0.2 part by weight of 2,5-dimethyl-2,5-di(tert-butylperoxy)hexyne-3 (trade name: PERHEXYNE 25B produced by NOF CORPORATION) was conducted. Melt kneading was conducted at 260°C with a twin-screw extruder, so as to obtain a cyclic olefin addition copolymer graft-modified with maleic anhydride (hereafter may be referred to as "MAH-COC"). The content of groups derived from maleic anhydride (maleic anhydride groups) in MAH-COC measured by $^1$H-NMR was 1.0 percent by weight.

[Resin 1]

Mixing of 100 parts by weight of ethylenetetracyclododecene copolymer (trade name: APEL 6509 produced by Mitsui Chemicals, Inc.) having a content of structural units derived from ethylene of 79 percent by mol and a content of structural units derived from tetracyclododecene of 21 percent by mol, a glass transition temperature of 90°C, and MFR of 34 g/10 min, 1 part by weight of maleic anhydride, and 0.2 part by weight of "PERHEXYNE 25B" was conducted. Melt kneading was conducted at 230°C with a twin-screw extruder, so as to obtain a cyclic olefin addition copolymer graft-modified with maleic anhydride (hereafter may be referred to as "Resin 1"). The content of groups derived from maleic anhydride in Resin 1 measured by $^1$H-NMR was 0.7 percent by weight.

[Resin 2]

Mixing of 100 parts by weight of ethylenetetracyclododecene copolymer (trade name: APEL 6011 produced by Mitsui Chemicals, Inc.) having a content of structural units derived from ethylene of 74 percent by mol and a content of structural units derived from tetracyclododecene of 26 percent by mol, a glass transition temperature of 110°C, and MFR of 24 g/10 min, 1 part by weight of maleic anhydride, and 0.2 part by weight of "PERHEXYNE 25B" was conducted. Melt kneading was conducted at 230°C with a twin-screw extruder, so as to obtain a cyclic olefin addition copolymer graft-modified with maleic anhydride (hereafter may be referred to as "Resin 2"). The content of groups derived from maleic anhydride in Resin 2 measured by $^1$H-NMR was 0.9 percent by weight.

[Resin 3]

Mixing of 100 parts by weight of ethylenetetracyclododecene copolymer (trade name: APEL 6013 produced by Mitsui Chemicals, Inc.) having a content of structural units derived from ethylene of 69 percent by mol and a content of structural units derived from tetracyclododecene of 31 percent by mol, a glass transition temperature of 130°C, and MFR of 16 g/10 main, 2 parts by weight of maleic anhydride, and 0.2 part by weight of "PERHEXYNE 25B" was conducted. Melt kneading was conducted at 250°C with a twin-screw extruder, so as to obtain a cyclic olefin addition copolymer graft-modified with maleic anhydride (hereafter may be referred to as "Resin 3"). The content of groups derived from maleic anhydride in Resin 3 measured by $^1$H-NMR was 1.4 percent by weight.

[Resin 4]

Mixing of 100 parts by weight of cyclic olefin ring-opening polymer (trade name: ZEONOR 1020R produced by ZEON Corporation, the content of structural units derived from the cyclic olefin (tetracyclododecene) = 50 percent by mol), 2 parts by weight of maleic anhydride, and 0.4 part by weight of "PERHEXYNE 25B" was conducted. Melt kneading was conducted at 230°C with a twin-screw extruder, so as to obtain a cyclic olefin ring-opening polymer graft-modified with maleic anhydride (hereafter may be referred to as "Resin 4"). The content of groups derived from maleic anhydride in Resin 4 measured by $^1$H-NMR was 1.4 percent by weight.

[Resin 5]

Mixing of 100 parts by weight of cyclic olefin ring-opening polymer (trade name: ZEONOR 1410R produced by ZEON Corporation, the content of structural units derived from the cyclic olefin (tetracyclododecene) = 50 percent by mol), 2 parts by weight of maleic anhydride, and 0.4 part by weight of "PERHEXYNE 25B" was conducted. Melt kneading was conducted at 250°C with a twin-screw extruder, so as to obtain a cyclic olefin ring-opening polymer graft-modified with maleic anhydride (hereafter may be referred to as "Resin 5"). The content of groups derived from maleic anhydride in Resin 5 measured by $^1$H-NMR was 1.4 percent by weight.

[Resin 6]

As for an acid-containing cyclic olefin ring-opening polymer, CARTON D (the content of structural units derived from the cyclic olefin (carboxymethyl tetracyclododecene) = 50 percent by mol; hereafter may be referred to as "Resin

6") produced by JSR Corporation was used. The content of acids included in Resin 6 measured by $^1$H-NMR was 70 percent by weight.

[Resin 7]

As for an acid-containing olefin polymer, 4-methyl-1-pentene polymer modified with maleic anhydride (MM101: produced by Mitsui Chemicals, Inc.; hereafter may be referred to as "Resin 7") was used. The content of groups derived from maleic anhydride in Resin 7 measured by $^1$H-NMR was 0.9 percent by weight.

[EXAMPLE 1]

Dry blending of 100 parts by weight of MAH-COC, which was obtained in Preparation example 1, serving as the olefin copolymer (A) and 1 part by weight of zinc acetate serving as the metal compound (B) was conducted. Furthermore, melt mixing was conducted with a 15-mm diameter twin-screw extruder at a cylinder temperature of 250°C, a dice temperature of 250°C, and the number of revolutions of screw of 100 rpm, and pellets were produced with a pelletizer. An aqueous solution of zinc acetate having any concentration was prepared and fed from a high-pressure injection zone independent of MAH-COC. The MFR was measured by using the resulting pellets and, in addition, a sheet having a thickness of 100 μm was formed with a compression press forming machine. As for the resulting sheet, the total haze, the refractive index, the Abbe number, the moisture permeability, and the dispersibility were evaluated. The results are shown in Table 1.

[EXAMPLES 2 to 6, COMPARATIVE EXAMPLES 1 to 5]

The same procedure as that in Example 1 was conducted except that the types and the amounts of the olefin copolymer (A) and the metal compound (B) used were as described in Table 1. The results thereof are shown in Table 1.

[EXAMPLE 7]

Dry blending of 100 parts by weight of "Resin 1" serving as the olefin copolymer (A) (modified resin) and 0.8 part by weight of potassium acetate serving as the metal compound (B) was conducted. Furthermore, melt mixing was conducted with a 15-mm diameter twin-screw extruder at a cylinder temperature of 250°C, a dice temperature of 250°C, and the number of revolutions of screw of 200 rpm, and pellets were produced with a pelletizer. An aqueous solution of potassium acetate having any concentration was prepared and fed from a high-pressure injection zone independent of Resin 1. A sheet having a thickness of 100 μm was formed with a compression press forming machine by using the resulting pellets. As for the resulting sheet, the total haze and the moisture permeability were evaluated. The results thereof are shown in Table 2.

[EXAMPLES 8 to 12, COMPARATIVE EXAMPLES 6 to 11, REFERENCE EXAMPLES 1 and 2]

The same procedure as that in Example 7 was conducted except that the types and the amounts of the olefin copolymer (A) (modified resin) and the metal compound (B) used were as described in Table 2 or Table 3. The results thereof are shown in Table 2 or Table 3.

[Table 1]

Table 1

| Level | Modified cyclic olefin addition polymer | Metal compound | Amount of blend of metal compound (parts by weight) | MFR (260°C, 2.16 kg load) (g/10 min) | Refractive index (D line) | Abbe number | Total haze (%) | Moisture permeability coefficient ($g \cdot mm/m^2 day$) | Visual evaluation of dispersibility |
|---|---|---|---|---|---|---|---|---|---|
| Example 1 | MAH-COC | zinc acetate | 1 | 0.48 | 1.5426 | 57.6 | 1.31 | 0.41 | AA |
| Example 2 | MAH-COC | potassium acetate | 1 | 0.16 | 1.5424 | 59.2 | 2.80 | 0.76 | AA |
| Example 3 | MAH-COC | zinc carbonate | 1 | 16.2 | 1.5427 | 60.3 | 12.40 | 0.32 | BB |
| Example 4 | MAH-COC | sodium carbonate | 1 | 15.5 | 1.5431 | 57.5 | 10.76 | 0.60 | BB |
| Example 5 | MAH-COC | potassium hydrogen carbonate | 1 | 2.9 | 1.5443 | 57.9 | 10.79 | 0.52 | BB |
| Example 6 | MAH-COC | aminoethyl-sulfonic acid potassium salt | 1 | 11.8 | 1.5432 | 62.9 | 0.87 | 0.35 | AA |
| Comparative example 1 | MAH-COC | | | 41.3 | 1.5433 | 51.7 | 1.44 | 0.071 | AA |
| Comparative example 2 | COC | | | 30.3 | 1.5439 | 49.0 | 0.34 | 0.050 | AA |
| Comparative example 3 | COC | zinc stearate | 1 | 47.4 | 1.5447 | 47.5 | 53.02 | 0.047 | CC |
| Comparative example 4 | COC | zinc acetate | 1 | 38.0 | 1.5426 | 49.5 | 39.74 | 0.18 | CC |
| Comparative example 5 | COC | potassium acetate | 1 | 36.5 | 1.5431 | 43.8 | 31.50 | 0.18 | CC |

The amount of blend of the metal compound is an amount relative to 100 parts by weight of the modified cyclic olefin addition copolymer.

In Table 1, regarding Examples 1 to 6, the MFR (melt fluidity index) is small as compared with those in Comparative examples 3 to 5. It is believed that this is because in Examples 1 to 6, a cross-linked structure was formed between the maleic anhydride group, which is a modifying group of MAH-COC, and the metal compound (B).
In Table 1, regarding Examples 1 to 6, the total haze is low and the visual evaluation of the dispersibility is good as compared with those in Comparative examples 3 to 5. It is believed that this is because in Examples 1 to 6, the maleic anhydride group, which is a modifying group of MAH-COC, performed a function of improving the dispersibility of the metal compound (B).
In Table 1, regarding Examples 1 to 6, the water vapor permeability coefficient (moisture permeability coefficient) is high as compared with those in Comparative examples 1 and 2. It is believed that this is because in Examples 1 to 6, the maleic anhydride group, which is a modifying group of MAH-COC, and the metal compound (B) were cross-linked, a hydrophilic aggregation structure was thereby formed and, as a result, the moisture permeability increased.
In Table 1, regarding Examples 1 to 6, the Abbe number is high as compared with those in Comparative examples 1 to 5. Although the specific reasons for this are not certain, it is supposed that in Examples 1 to 6, cross-linking between the maleic anhydride group, which is a modifying group of MAH-COC, and the metal compound (B) was involved therein.
[Table 2]

Table 2

| | | | Example 7 | Example 8 | Example 9 | Example 10 | Example 11 | Example 12 | Reference example 1 |
|---|---|---|---|---|---|---|---|---|---|
| | Polar group content (percent by weight) | | 0.7 | 0.9 | 1.4 | 1.4 | 1.4 | 70 | 0.9 |
| Blend | Modified resin [parts by weight] | Resin 1 | 100 | 0 | 0 | 0 | 0 | 0 | 0 |
| | | Resin 2 | 0 | 100 | 0 | 0 | 0 | 0 | 0 |
| | | Resin 3 | 0 | 0 | 100 | 0 | 0 | 0 | 0 |
| | | Resin 4 | 0 | 0 | 0 | 100 | 0 | 0 | 0 |
| | | Resin 5 | 0 | 0 | 0 | 0 | 100 | 0 | 0 |
| | | Resin 6 | 0 | 0 | 0 | 0 | 0 | 100 | 0 |
| | | Resin 7 | 0 | 0 | 0 | 0 | 0 | 0 | 100 |
| | Metal compound [parts by weight] | Potassium acetate | 0.8 | 1.1 | 1.5 | 1.5 | 1.5 | 20 | 1.4 |
| Property | Total haze [%] | | 2.65 | 1.97 | 2.73 | 1.58 | 2.51 | 2.66 | 13.4 |
| | Moisture permeability coefficient [gmm/$m^2$day] | | 0.122 | 0.125 | 0,201 | 0.141 | 0.135 | 4.144 | 3.611 |
| | Rate of increase in moisture permeability [%] | | 71.8 | 76.1 | 183.1 | 76.3 | 68.8 | 3. 9 | 1.8 |

[Table 3]

Table 3

| | | | Comparative example 6 | Comparative example 7 | Comparative example 8 | Comparative example 9 | Comparative example 10 | Comparative example 11 | Reference example 2 |
|---|---|---|---|---|---|---|---|---|---|
| | Polar group content (percent by weight) | | 0.7 | 0.9 | 1.4 | 1.4 | 1.4 | 70 | 0.9 |
| Blend | Modified resin [parts by weight] | Resin 1 | 100 | 0 | 0 | 0 | 0 | 0 | 0 |
| | | Resin 2 | 0 | 100 | 0 | 0 | 0 | 0 | 0 |
| | | Resin 3 | 0 | 0 | 100 | 0 | 0 | 0 | 0 |
| | | Resin 4 | 0 | 0 | 0 | 100 | 0 | 0 | 0 |
| | | Resin 5 | 0 | 0 | 0 | 0 | 100 | 0 | 0 |
| | | Resin 6 | 0 | 0 | 0 | 0 | 0 | 100 | 0 |
| | | Resin 7 | 0 | 0 | 0 | 0 | 0 | 0 | 100 |
| | Metal compound [parts by weight] | Potassium acetate | 0 | 0 | 0 | 0 | 0 | 0 | 0 |
| Property | Total | haze [%] | 0.40 | 0.95 | 1.08 | 4.71 | 1.96 | 0.69 | 1.34 |
| | Moisture permeability coefficient [gmm/$m^2$day] | | 0.071 | 0.071 | 0.071 | 0.080 | 0.080 | 3.987 | 3.547 |

## Claims

1. An ionomer resin composition, which is obtained by bringing a functional group-containing olefin copolymer (A) having a structural unit derived from a cyclic olefin in the range of 10 percent by mol or more and having a group derived from an acid and/or a derivative thereof as the functional group into contact with a metal compound (B).

2. The ionomer resin composition according to claim 1, wherein the functional group-containing olefin copolymer (A) has the structural unit derived from a cyclic olefin in the range of 10 to 50 percent by mol.

3. The ionomer resin composition according to claim 1 or claim 2, wherein the acid and/or the derivative thereof is an unsaturated carboxylic acid and/or an unsaturated carboxylic acid anhydride.

4. The ionomer resin composition according to claim 1 or claim 2, wherein the acid and/or the derivative thereof is a sulfonic acid and/or a sulfonic acid anhydride.

5. The ionomer resin composition according to any one of claims 1 to 4, which is obtained by bringing 100 parts by weight of the functional group-containing olefin copolymer (A) into contact with 0.1 to 50 parts by weight of the metal compound (B).

6. The ionomer resin composition according to any one of claims 1 to 5, wherein the metal compound (B) is at least one selected from the group consisting of an organic acid metal salt, a carbonic acid metal salt, and an inorganic acid metal salt.

7. The ionomer resin composition according to claim 6, wherein the organic acid metal salt is an acetic acid metal salt.

8. The ionomer resin composition according to claim 6 or claim 7, wherein the inorganic acid metal salt is an aminosulfonic acid metal salt.

9. The ionomer resin composition according to any one of claims 1 to 8, wherein the functional group-containing olefin copolymer (A) is a copolymer obtained by graft-modifying an olefin copolymer having a structural unit derived from a cyclic olefin in the range of 10 percent by mol or more and having a glass transition temperature, which is measured by DSC, in the range of 70°C to 200°C with the acid and/or the derivative thereof.

10. The ionomer resin composition according to any one of claims 1 to 9, wherein the total content of the group derived from the acid and the derivative thereof in the functional group-containing olefin copolymer (A) is in the range of 0.1 to 70 percent by weight.

11. The monomer resin composition according to any one of claims 1 to 10, which has a melt flow rate (MFR) measured at a temperature of 260°C under a load of 2.16 kg on the basis of ASTM D1238 in the range of 0.01 to 200 g/10 min.

12. The ionomer resin composition according to any one of claims 1 to 11, which has a degree of cloudiness (haze) measured in the state of a sheet having a thickness of 100 μm at room temperature on the basis of JIS K7105 in the range of 0.1% to 30%.

13. The ionomer resin composition according to any one of claims 1 to 12, which has 0.1 g·mm/($m^2$·day) or more of a water vapor permeability coefficient measured in the state of a sheet having a thickness of 100 μm at a temperature of 40°C and a relative humidity of 90% on the basis of JIS K7129 · B method.

14. A shaped article, which is obtained from the ionomer resin composition according to any one of claims 1 to 13.

15. The shaped article according to claim 14, which is an optical member.

16. The shaped article according to claim 14, which is a film.

17. The shaped article according to claim 14, which is a lens.

**INTERNATIONAL SEARCH REPORT**

International application No.
PCT/JP2009/056538

A. CLASSIFICATION OF SUBJECT MATTER
*C08L45/00*(2006.01)i, *C08F8/46*(2006.01)i, *C08J5/00*(2006.01)i, *C08K3/00*(2006.01)i, *C08L23/26*(2006.01)i, *C08L65/00*(2006.01)i

According to International Patent Classification (IPC) or to both national classification and IPC

B. FIELDS SEARCHED

Minimum documentation searched (classification system followed by classification symbols)
C08L45/00, C08F8/46, C08J5/00, C08K3/00, C08L23/26, C08L65/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 39-6810 B1 (E.I. Du Pont De Nemours & Co.), 08 May, 1964 (08.05.64), Full text (Family: none) | 1-17 |
| A | JP 42-15769 B1 (E.I. Du Pont De Nemours & Co.), 30 August, 1967 (30.08.67), Full text (Family: none) | 1-17 |
| A | JP 2003-82023 A (JSR Corp.), 19 March, 2003 (19.03.03), Full text & US 2003/0158347 A1 & EP 1454952 A1 & WO 2003/002657 A1 & DE 60214035 T & CA 2419902 A & BR 205729 A & CN 1464895 A | 1-17 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 May, 2009 (25.05.09) | 02 June, 2009 (02.06.09) |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2009/056538

C (Continuation). DOCUMENTS CONSIDERED TO BE RELEVANT

| Category* | Citation of document, with indication, where appropriate, of the relevant passages | Relevant to claim No. |
|---|---|---|
| A | JP 2005-133086 A (JSR Corp.), 26 May, 2005 (26.05.05), Full text & US 2008/0057302 A1 & EP 1672022 A1 & WO 2005/035649 A1 & KR 10-2006-0123109 A & CN 1863862 A | 1-17 |
| A | JP 2006-83361 A (JSR Corp.), 30 March, 2006 (30.03.06), Full text & US 2007/0225449 A1 & EP 1679323 A1 & WO 2005/040236 A1 & KR 10-2006-0103320 A & CN 1898272 A | 1-17 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 196406810 B
- JP 196715769 B
- JP 2003082023 A
- JP 2005133086 A
- JP 2006083361 A
- JP 57154133 A
- JP 2006137838 A